# EUROPÄISCHE PATENTSCHRIFT

(11) **EP 1 297 310 B1**
(45) Veröffentlichungstag und Bekanntmachung des Hinweises auf die Patenterteilung: **23.07.2008**
(21) Anmeldenummer: 01955208.2
(22) Anmeldetag: 18.06.2001
(51) Int. Cl.: G01C 21/34

(54) **VERFAHREN ZUR AUSWAHL VON KARTENINFORMATIONEN UND NAVIGATIONSVORRICHTUNG**
METHOD FOR SELECTING MAP INFORMATION, AND NAVIGATION DEVICE
PROCEDE DE SELECTION D'INFORMATIONS A PARTIR D'UNE CARTE, ET DISPOSITIF DE NAVIGATION

(30) Priorität: 19.06.2000 DE 10029198
(43) Veröffentlichungstag der Anmeldung: 02.04.2003
(73) Patentinhaber: ROBERT BOSCH GMBH, 70442 Stuttgart (DE)
(72) Erfinder: DRAEGER, Gerd, 38102 Braunschweig (DE); KELCH, Lutz, 38159 Velchede (DE); BUSSE, Michael, 30171 Hannover (DE)
(86) Internationale Anmeldenummer: PCT/DE2001/002204
(87) Internationale Veröffentlichungsnummer: WO 2001/098734

(56) Entgegenhaltungen:
- EP-A- 0 246 452
- EP-A- 0 933 616
- EP-A- 0 943 896

## Beschreibung

### Stand der Technik

Die heutigen Fahrzeugnavigationssysteme bestehen im Wesentlichen aus den Subsystemen digitale Straßenkarte, Rechenmodul zur Fahrtroutenberechnung, Positionsbestimmung, Systemverwaltung, Fahrzeugsensorik zur Erkennung von Fahrzeugbewegungen, eine Eingabeeinheit und eine Ausgabeeinheit für die Bedienung und Zielführung. Die digitale Straßenkarte liegt üblicherweise auf einem Datenträger, beispielsweise Navigations-CD-ROM, im Fahrzeug vor. Nach Eingabe des Zieles berechnet das Navigationssystem die Route auf Grundlage des vorhandenen Kartenmaterials. Die berechnete Route wird für die Zielführung verwendet. Wird während der Fahrt die aktuelle Route vom Fahrer verlassen, berechnet das Navigationsgerät aufgrund des aktuellen Standorts eine neue Route.

EP-A-0 943 896 offenbart ein Routensystem, bei dem in einem Bereich vom Start- bis zum Zielpunkt mehrere Routen angegeben werden, die mit einem Attraktor bewertet sind. verlässt der Fahrer eine solche Route, wird er zu der optimalen Route zurückgeführt.

### Vorteile der Erfindung

Das erfindungsgemäße Verfahren und die erfindungsgemäße Navigationsvorrichtung mit den Merkmalen der nebengeordneten Ansprüche hat demgegenüber den Vorteil, dass, da nur der Zugriff auf diejenigen Kartendaten notwendig ist, die während der Zielführung auch benötigt werden, kein Zugriff auf die gesamte digitale Karte notwendig ist. Vorteilhaft ist darüberhinaus, dass bei der Verwendung einer digitalen Karte im Fahrzeug die komplette Route mit Korridor und evtl. weiteren Informationen im RAM-Speicher vorliegt, so dass während der aktiven Zielführung nicht auf die Basisdaten - die in der Regel auf einem Massenspeicher wie beispielsweise CD-ROM gespeichert sind - zurückgegriffen werden muß. Vorteilhaft ist, dass bei Verwendung des erfindungsgemäßen Verfahrens in einer Zentrale zum einen im fahrzeuggebundenen Navigationsgerät keine Basisdaten, d.h. keine digitale Karte, z.B. auf CD-ROM, vorhanden sein müssen und somit kostenträchtige Bauteile eingespart werden können, und zum anderen der Routenkorridor in einer Zentrale ständig aus neuesten Karteninformationen erstellbar ist. Vorteilhaft ist daher die Reduktion der ständig benötigten Datenmenge gegenüber einer vollständigen Karte, wenn lediglich ein Korridor um eine Navigationsroute vom Startort der Navigation zum Zielort der Navigation Verwendung findet. Dadurch können die Kosten z.B. für Datenträger, eine evtl. Übertragung der Daten, beispielsweise über eine Funkschnittstelle, und die Nutzungsgebühr für die Kartendaten, insbesondere bei einem Diensteanbieter, reduziert werden. Weiterhin wird dadurch vorteilhaft die Zugriffsgeschwindigkeit auf die Elemente des Routenkorridors erhöht, da durch die kleinere Datenmenge der gesamte Korridor im schnelleren RAM-Speicher abgelegt werden kann.

Weiterhin ist von Vorteil, dass der wenigstens eine Parameter vorsieht, dass die ausgewählten Karteninformationen einfehlertolerant oder zweifehlertolerant und/oder im Start- und Zielbereich des Polygonzugs vielfehlertolerant sind. Dadurch werden ausreichend viele Informationen für eine optimale Rückführung auf die geplante Route zur Verfügung gestellt, wenn eine oder zwei und/oder im Start- und Zielbereich eine Mehrzahl von gegebenen Fahranweisungen nicht befolgt werden. Dadurch wird zwar die Menge der Informationen des Routenkorridors vergrößert, jedoch deren Flexibilität zu Navigationszwecken erheblich erhöht, woraus sich insgesamt ein Vorteil ergibt.

Weiterhin ist von Vorteil, dass der wenigstens eine Parameter vorsieht, dass die ausgewählten Karteninformationen abhängig von der Straßenklasse ein-, zwei- oder vielfehlertolerant sind. Dadurch wird erreicht, dass die Menge der im Routenkorridor vorzusehenden Informationen nicht unnötig durch eine generell große Fehlertoleranz vergrößert wird, weil für erfahrungsgemäß fehleranfällige Teilstücke der Hauptroute (bspw. Standgebiet oder Nahverkehrbereich) eine größere Fehlertoleranz eingestellt wird als für erfahrungsgemäß weniger fehleranfällige Teilstücke (bspw. Autobahnen).

Weiterhin ist von Vorteil, dass der wenigstens eine Parameter vorsieht, dass die ausgewählten Karteninformationen Zielführungsanweisungen umfassen. Erfindungsgemäße Routenkorridore bzw. erfindungsgemäß ausgewählte Karteninformationen können daher auch in Zielführungssystemen zum Einsatz kommen, die keine eigene Routenberechnung durchführen. Es wird dadurch ermöglicht, dass die Zielführungsanweisungen in den Korridor bzw. in den ausgewählten Karteninformationen mit abgelegt werden. Eine Routenberechnung kann jedoch dennoch innerhalb des Korridors vollzogen werden, da weiterhin alle relevanten Kartendaten vorhanden sind.

Weiterhin ist von Vorteil, dass die Zielführungsanweisungen auf dem kürzesten, schnellsten oder effizientesten Weg zum Polygonzug zurückführen (Nebenroute) und/oder zum Ziel zurückführen (Alternativroute). Dadurch ist je nach Wunsch eines Benutzers ein mehr oder weniger umfangreicher Routenkorridor erzeugbar.

### Zeichnung

Ein Ausführungsbeispiel der Erfindung ist in der Zeichnung dargestellt und in der nachfolgenden Beschreibung näher erläutert. Es zeigen
Figur 1 eine Darstellung eines ersten Beispiels eines erfindungsgemäßen Routenkorridors,
Figur 2 eine Darstellung eines zweiten Beispiels eines erfindungsgemäßen Routenkorridors,
Figur 3 eine Darstellung eines dritten Beispiels eines erfindungsgemäßen Routenkorridors,
Figur 4 eine Darstellung eines vierten Beispiels eines erfindungsgemäßen Routenkorridors,
Figur 5 eine Darstellung eines fünften Beispiels eines erfindungsgemäßen Routenkorridors und
Figur 6 eine erfindungsgemäße Navigationsvorrichtung.

### Beschreibung der Ausführungsbeispiele

Die Erfindung beschreibt ein Verfahren, mit dem aus einer bekannten Route ein Routenkorridor erstellt wird, der die Eigenschaft besitzt, dass neben der eigentlichen Hauptroute - bestehend unter anderem aus den Straßensegmenten der Originalkarte - weitere Straßensegmente berücksichtigt sind, auf denen das Navigationsgerät navigieren kann. Die "Breite" des Routenkorridors oder die Anzahl der zusätzlichen Straßenelemente bzw. Straßensegmente wird nach vorgegebenen Parametern, wie z.B. die tolerierte Fehlerzahl von Falschfahrten, erzeugt. Neben den aus der digitalen Karte ausgewählten Straßensegmenten, die zu einer Routenberechnung innerhalb des Korridors verwendet werden können, werden alternativ oder zusätzlich Zielführungsanweisungen für Straßenabschnitte generiert. Diese Anweisungen werden erfindungsgemäß je nach Einstellung der Parameter zur Durchführung des Verfahrens beispielsweise derart generiert, dass sie entweder nach einiger Zeit auf einer Nebenroute zur ursprünglichen Hauptroute zurückführen oder dass sie eine Zielführung entlang einer Alternativroute durchführen. Hierbei können sich beliebige Überlappungen zwischen der Hauptroute, der Nebenroute oder der Alternativroute ergeben, d.h. die Hauptroute und/oder eine oder mehrere Nebenrouten können in der Alternativroute und umgekehrt enthalten sein.

Die Zielführungsanweisungen in einer Alternativroute können derart generiert werden, dass das Fahrzeug auf der besten Route zum Ziel geführt wird. In der Regel wird dies dazu führen, dass die Zielführungsanweisungen den Fahrer wieder auf die Hauptroute zurückführen. Es kann jedoch auch vorgesehen und gewünscht sein, dass der Fahrer auf einer komplett unterschiedlichen Alternativroute zum Ziel geführt wird, da von diesem Punkt eine völlig neue Route zum Ziel gefunden wurde.

Da in der Regel die beste Nebenroute nach einer Falschfahrt ein Wendemanöver auf die Hauptroute zurück ist, kann alternativ das erste Straßen-Teilstück beim Erzeugen des Routenkorridors mit einem hohen Fahrwiderstand für den Routenberechnungsalgorithmus versehen werden. Somit wird vorrangig eine Neben- bzw. Alternativroute berechnet, die nicht direkt durch ein Wendemanöver auf die Hauptroute zurückführt.

Das erfindungsgemäße Verfahren erstellt aus einer bekannten vorgegebenen Hauptroute bzw. einem Polygonzug, der auf eine digitale Karte "gematcht" wird - d.h. wobei eine Passung zwischen digitaler Karte und Route bzw. Polygonzug hergestellt wird - einen Routenkorridor nach einem oder mehreren erfindungsgemäßen Kriterien oder Parametern. Ein mögliches erfindungsgemäßes Kriterium wird "Einfehlertoleranz" genannt. Dies bedeutet, dass dem Fahrer immer genau ein falsches Fahrmanöver zugestanden wird, sofern er sich auf der berechneten Route befindet, d.h. sofern er sich auf der Hauptroute befindet. Sobald er eine Zielführungsanweisung nicht befolgt hat, weicht er von der vorgeschlagenen Hauptroute ab, er wird aber weiterhin zum Ziel geführt, indem er nach einiger Zeit über eine Nebenroute wieder auf die Hauptroute, oder auf einer Alternativroute zum Ziel geführt wird. Als Nebenroute wird hierbei eine Route bezeichnet, die von der Stelle auf der Hauptroute, bei der die Hauptroute verlassen wurde, auf den nächsten günstigsten Anschlußpunkt der Hauptroute zurückführt. Als Alternativroute wird eine Route bezeichnet, die den besten - d.h. entweder den kürzesten oder den schnellsten oder den effizientesten - Weg zum Ziel der Navigation angibt.

Das erfindungsgemäße Verfahren berechnet daher den Routenkorridor zum einen aus einer Hauptroute, d.h. einem vorgegebenen Polygonzug und zum anderen aus einer digitalen Karte, die beispielsweise auf einer Navigations-CD-ROM, abgelegt ist. Die Hauptroute wird dabei durch ein beliebiges Verfahren ermittelt, beispielsweise einem Navigationsalgorithmus in einem Navigationsgerät, das in einem Fahrzeug installiert ist oder in einer Zentrale bei einem Diensteanbieter oder auch Serviceprovider. Als Parameter zur Steuerung der Durchführung des erfindungsgemäßen Verfahrens wird insbesondere die Anzahl der tolerierten Fehler vorgegeben, ein erweitertes Startgebiet definiert und ein erweitertes Zielgebiet definiert. Diese Angaben werden ebenfalls dem erfindungsgemäßen Verfahren zur Verfügung gestellt. Beim erweiterten Start- bzw. Zielgebiet handelt es sich um solche Gebiete um einen Start- bzw. Zielpunkt herum, in denen der Routenkorridor bzw. die ausgewählten Karteninformationen die digitale Karte vollständig enthalten.

Unabhängig vom benutzten Verfahren zur Berechnung einer Route (Kriterium Schnelligkeit, Zeiteffektivität usw.), wird um die vorgegebene Route der Korridor gelegt. Der Korridor wird derart erzeugt, dass an die vorhandenen Straßen bzw. Routenelemente weitere Straßensegmente an die Verknüpfungspunkte (Knoten) aus einer Kartendatenbank angehängt werden. Wie viele Straßensegmente angehängt werden, kann durch Vorgabe mindestens eines der folgenden Parameter vorgeschrieben werden: Angabe der Fehlertoleranz, Detailgebiete im Start- und Zielbereich, Fehlertoleranz in Abhängigkeit der Straßenklasse. Einfehlertolerant bedeutet, dass dem Fahrer bei einem falschen Abbiegemanöver trotzdem eine Zielführungsanweisung gegeben werden kann. Zweifehlertolerant bedeutet, entweder, dass der Fahrer zweimal direkt aufeinanderfolgend falsch abbiegen darf und auch dann noch eine Fahranweisung gegeben werden kann, oder, daß der Fahrer sowohl auf der Hauptroute als auch auf einer Neben-/Alternativroute falsch abbiegen darf und auch dann noch eine Fahranweisung gegeben werden kann. Bei einem weiteren Fehler kann sich das Fahrzeug außerhalb des Korridors befinden. Dabei ist es denkbar, dass die gewählte Fehlertoleranz von der zugrundeliegenden Straßenklasse abhängig ist. So kann beispielsweise in Nahverkehrsbereichen eine höhere Fehlertoleranz als auf Autobahnen gewährt werden.

Start- oder Zielgebiet können wahlweise als vollständiger Kartenausschnitt generiert werden, da im Start- oder Zielgebiet - in der Regel ein Stadtgebiet - die Wahrscheinlichkeit am größten ist, den Anweisungen des Navigationsgerätes nicht folgen zu können. Im Bereich des Startgebietes kann ein vollständiger Kartenausschnitt die Initialisierung eines Map Matching-Algorithmus beschleunigen. Weiterhin steht im Zielgebiet eine Karte für die Fußgängernavigation zur Verfügung.

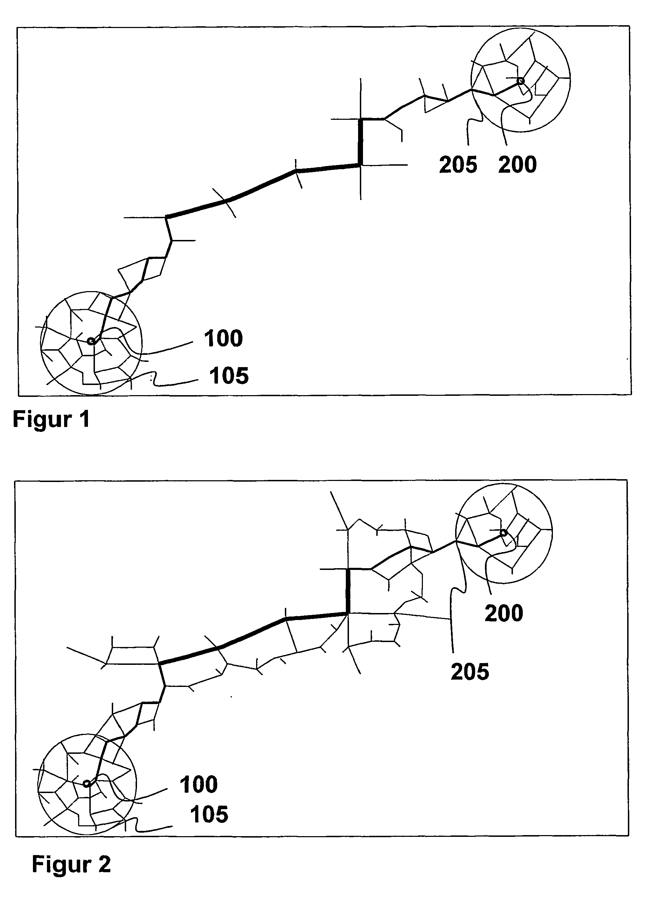

In Figur 1 ist eine Darstellung eines ersten Beispiels eines erfindungsgemäßen Routenkorridors dargestellt. Es wird ein Startpunkt 100 und ein Zielpunkt 200 angegeben sowie ein Startgebiet und ein Zielgebiet, wobei das Startgebiet durch einen mit dem Bezugszeichen 105 versehenen Kreis bezeichnet ist und wobei das Zielgebiet mit einem durch das Bezugszeichen 205 bezeichneten Kreis angegeben ist. Die Route bzw. der vorgegebene Polygonzug wird durch die fett dargestellten Linien in Figur 1 dargestellt. Ersichtlich ist, dass in Figur 1 nicht nur der nackte Polygonzug sondern auch Abzweigmöglichkeiten, die als normal breite Linien entlang der Hauptroute bzw. entlang des Polygonzugs dargestellt sind.

In Figur 2 ist eine Darstellung eines zweiten Beispiels eines erfindungsgemäßen Routenkorridors dargestellt. Es ist wiederum der Startpunkt 100, der Zielpunkt 200 und das erweiterte Startgebiet 105 und das erweiterte Zielgebiet 205 dargestellt. Im Gegensatz zum ersten Beispiel eines erfindungsgemäßen Routenkorridors enthält jedoch der Routenkorridor im zweiten Beispiel außer den Abzweigungen von der Hauptroute vollständige, sich an die Hauptroute anschließende Maschen der digitalen Karte.

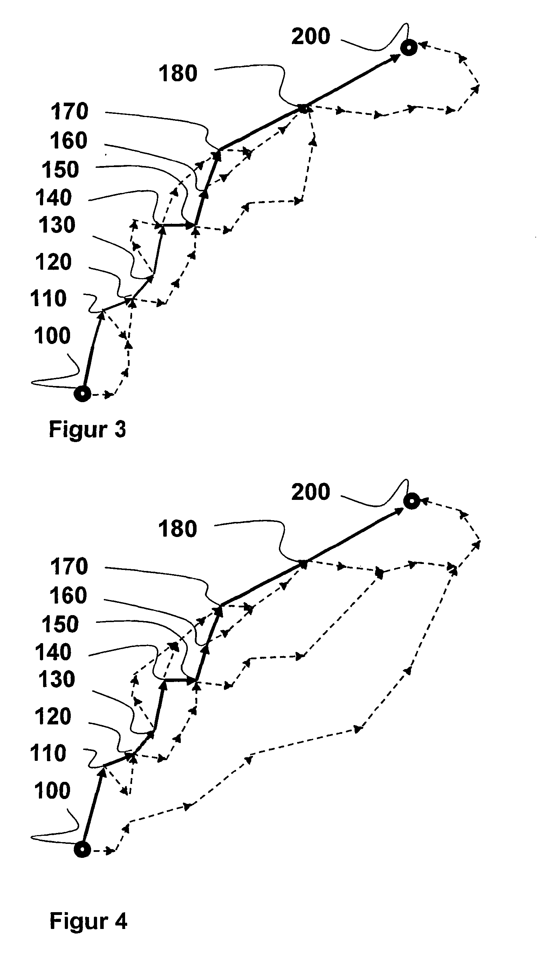

In Figur 3 ist ein drittes Beispiel eines erfindungsgemäßen Routenkorridors dargestellt. Vom Startpunkt 100 weist ein erster Pfeil zu einem ersten Zwischenpunkt 110. Vom ersten Zwischenpunkt 110 weist ein zweiter Pfeil zu einem zweiten Zwischenpunkt 120. Vom zweiten Zwischenpunkt 120 weist ein dritter Pfeil zu einem dritten Zwischenpunkt 130. Vom dritten Zwischenpunkt 130 weist ein dritter Pfeil zu einem vierten Zwischenpunkt 140. Vom vierten Zwischenpunkt 140 weist ein fünfter Pfeil zu einem fünften Zwischenpunkt 150. Vom fünften Zwischenpunkt 150 weist ein sechster Pfeil zu einem sechsten Zwischenpunkt 160. Vom sechsten Zwischenpunkt 160 weist ein siebter Pfeil zu einem siebten Zwischenpunkt 170. Vom siebten Zwischenpunkt 170 weist ein achter Pfeil zu einem achten Zwischenpunkt 180. Vom achten Zwischenpunkt 180 weist ein neunter Pfeil zum Zielpunkt 200. Der erste, zweite, dritte, vierte, fünfte, sechste, siebte, achte und neunte Pfeil sind, genauso wie die Zwischenpunkte 110 bis 180 Teil der Hauptroute. In Figur 3 sind neben den Pfeilen der Hauptroute weitere Pfeile gestrichelt dargestellt. Diese gehören zu Nebenrouten. Es ist nun so, dass bei einem Navigationsvorgang, beispielsweise eines Kraftfahrzeugs, der Fall bevorzugt wird, dass das Fahrzeug auf der Hauptroute vom Startpunkt 100 bis zum Zielpunkt 200 verbleibt. Falls dies jedoch aus unterschiedlichsten Gründen nicht der Fall ist, beispielsweise dann, wenn der Fahrer eine Anweisung des Navigationssystems nicht befolgt, braucht ein Zielführungssystem Informationen, die über die im Polygonzug enthaltenen Informationen hinaus gehen. Erfindungsgemäß ist hierfür der Routenkorridor vorgesehen, der die notwendigen Informationen umfaßt. Der Routenkorridor umfaßt erfindungsgemäß in Abhängigkeit der Parameter zur Durchführung des Verfahrens unterschiedlich viele Informationen. Je nach Einstellung der Parameter des Verfahrens enthält der Routenkorridor bspw. von dem Punkt der Abweichung von der Hauptroute aus eine Nebenroute, die so ausgelegt ist, dass sie auf dem schnellsten Weg zur Hauptroute zurückführt. Zur Verdeutlichung dieses Sachverhalts sind in Figur 3 gestrichelt dargestellte Pfeile vorgesehen. Die Pfeile, d.h. sowohl die Pfeile der Hauptroute als auch die Pfeile der Nebenrouten entsprechen Zielführungsanweisungen. Wenn folglich der Routenkorridor entsprechend des dritten Beispiels eines Routenkorridors einem Zielführungssystem ohne eigene Routenberechnung zugeführt wird, so kann das Zielführungssystem anhand der Zielführungsanweisungen das Ziel 200 erreichen. Wenn das Zielführungssystem eine eigene Routenberechnung unterstützt, werden die Daten des Routenkorridors auf bekannte Weise zur Berechnung des günstigsten Wegs zum Ziel benutzt, wobei die Zielführungsanweisungen im Verlauf einer solchen Routenbereichnung aus den im Routenkorridor befindlichen Informationen erzeugt werden. Es wären dann im Routenkorridor als solchem keine Zielführungsanweisungen notwendig (jedoch auch nicht hinderlich), so dass die im dritten Beispiel eines Routenkorridors dargestellten Pfeile auch ohne die Richtungsinformationen als bloße Verbindungslinien erfindungsgemäß vorgesehen sind. Hierbei ist es erfindungsgemäß insbesondere sinnvoll, den Teilnehmer, d.h. insbesondere ein Fahrzeug, nicht durch ein Wendemanöver unmittelbar im Anschluß an die aufgetretene Abweichung von der Hauptroute zum Ziel zu führen. Daher ist es erfindungsgemäß sinnvoll, vom Punkt der Abweichung von der Hauptroute eine Anzahl von Straßensegmenten der Hauptroute bei der erneut durchgeführten Routenberechnung mit einem hohen Fahrwiderstand zu belegen, um zu verhindern, dass das Fahrzeug auf direktem Weg, d.h. durch ein Wendemanöver, wieder auf die Hauptroute navigiert wird. Hierdurch wird ein Algorithmus zur Routenberechnung unabhängiger vom ursprünglich geplanten Routenverlauf zwischen Start- und Zielpunkt, d.h. unabhängiger von der Hauptroute.

Zum Erzeugen der Zielführungsanweisung kann alternativ auch der Teil der Hauptroute, den der Fahrer als nächstes befahren hätte, für das Berechnen einer Neben- oder Alternativroute mit einem Fahrwiderstand belegt werden. Da der Fahrer in der Regel nicht grundlos die Hauptroute verlassen hat - ein Beispiel ist das Abweichen von der Hauptroute aufgrund eines vorausliegenden Staus -, hat dieses Verfahren den Vorteil, dass nicht zwingend bei der nächsten Möglichkeit auf die Hauptroute zurückgeführt wird, sondern nach den gewählten Routenberechnungskriterien - insbesondere kürzeste, schnellste, effizienteste Fahrt - und den Fahrwiderständen abgewogen wird. Es ergibt sich somit in der Regel eine Neben- oder Alternativroute, die das vom Fahrwiderstand gesperrte Hauptroutenstraßenstück komplett umfährt.

In Figur 4 ist ein viertes Beispiel eines erfindungsgemäßen Routenkorridors dargestellt. Hierbei sind wiederum die Teile der Hauptroute und die Zwischenpunkte 110 bis 180 dargestellt. Weiterhin sind Alternativrouten aus gestrichelt dargestellten Pfeilen zusammengesetzt. Die Parameter zur Durchführung des erfindungsgemäßen Verfahrens sind daher zur Erzeugung des vierten Beispiels eines Routenkorridors so eingestellt, dass bei Abweichungen von der Hauptroute nicht die Nebenrouten sondern die Alternativrouten in den Routenkorridor aufgenommen werden. Auch im vierten Beispiel des erfindungsgemäßen Routenkorridors symbolisieren die Pfeile Zielführungsanweisungen.

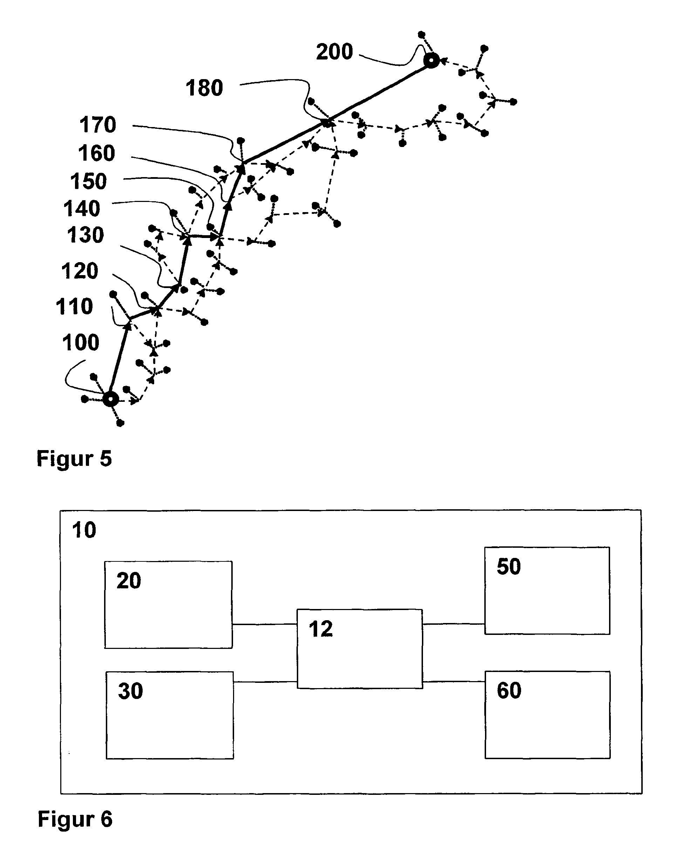

In Figur 5 ist ein fünftes Beispiel eines erfindungsgemäßen Routenkorridors dargestellt. Zusätzlich zu den Pfeilen der Hauptroute (durchgezogene Pfeile) und den Pfeilen der Neben- bzw. Alternativrouten (gestrichelte Pfeile) sind in Figur 5 noch die jeweils ersten verzweigenden Straßenabschnitte mittels kurzgestrichelter und mit einem Punkt endenden kurzen Linien dargestellt, d.h. der Routenkorridor gemäß des fünften Beispiels umfasst ebenfalls solche Informationen über die an einem beliebigen Punkt noch vorhandenen Straßensegmente außerhalb des Verlaufs der Hauptroute, der Nebenrouten und der Alternativrouten. Die verzweigenden Straßenabschnitte ermöglichen es, sicher zwischen dem Zustand zu unterscheiden, dass der Fahrer entsprechend den Fahrtanweisungen richtig oder falsch fährt.

In Figur 6 ist eine erfindungsgemäße Navigationsvorrichtung 10 oder auch Navigationssystem 10 dargestellt. Die Navigationsvorrichtung 10 umfaßt einen Speicher 20, der insbesondere als Arbeitsspeicher ausgebildet ist und wiederbeschreibbar ist. Der Speicher 20 ist insbesondere ein Speicher mit schnellem Zugriff. Die Navigationsvorrichtung 10 umfaßt weiterhin eine Routenberechnungseinheit 30 und eine Steuereinheit 12. Durch die Routenberechnungseinheit 30 werden Informationen, die von einer digitalen Karte stammen, anhand von Ortsbestimmungsdaten, die der Navigationsvorrichtung 10 von einer nicht dargestellten Ortsbestimmungseinheit zugeführt werden, und anhand von Zielinformationen in Zielführungsanweisungen umgewandelt, die - gesteuert von der Steuereinheit 12 - beispielsweise in dem Speicher 20 gespeichert werden. Die Routenberechnungseinheit 30 ist wahlweise vorhanden.

Die Navigationsvorrichtung umfaßt darüberhinaus einen Massenspeicher 50 und/oder eine Funkschnittstelle 60. Im Massenspeicher wird beispielsweise eine digitale Karte, insbesondere als CD-ROM, abgelegt. Über die Funkschnittstelle werden Informationen, von der Navigationsvorrichtung 20 gesendet und/oder empfangen. Unter den empfangenen Informationen befinden sich insbesondere solche, die ein nicht dargestellter Diensteanbieter zu der Navigationsvorrichtung als Teil einer digitalen Karte, insbesondere als Routenkorridor sendet. Über die Funkschnittstelle 60 kann das Navigationssystem Karteninformationen oder sonstige Informationen von einer Zentrale, beispielsweise eines Serviceproviders, anfordern.

Der Arbeitsspeicher 20 speichert Daten für einen aktuellen Navigationsvorgang. Beim Vorhandensein eines Massenspeichers wird auf der sich im Massenspeicher befindlichen digitalen Karte eine Routenberechnung durchgeführt, wobei bei jeder Abweichung von der Routenberechnung erneut auf die digitale Karte des Massenspeichers 50 zurückgegriffen werden muß, falls lediglich die Informationen der Hauptroute vorliegen. Erfindungsgemäß wird lediglich einmal auf den Massenspeicher zugegriffen und eine Hauptroute definiert. Zu dieser Hauptroute wird ein Routenkorridor erzeugt und im Arbeitsspeicher 20 abgelegt. Ein Zugriff auf den Massenspeicher 50 ist dann bei der gleichen Navigationsführung nicht mehr notwendig.

Im Fall der Abwesenheit eines Massenspeichers 50 gilt dasselbe für die Kommunikation über die Funkschnittstelle 60 mit einer Zentrale eines Serviceproviders. Die Anfrage mit den relevanten Start- und Zieldaten der Navigation wird zum Serviceprovider gesendet und von dort wird nicht lediglich die Hauptroute zum Navigationsgerät bzw. der Navigationsvorrichtung gesendet, sondern es wird darüber hinaus der erfindungsgemäße Routenkorridor mit gesendet, so dass für eine Abweichung von der vorgesehenen Hauptroute eine erneute Anfrage bei dem Serviceprovider nicht erforderlich ist.

In der Navigationsvorrichtung werden - bei Anwesenheit der Möglichkeit der Routenberechnung - Zielführungsanweisungen oder - bei Absesenheit der Routenberechnung - die im Routenkorridor je nach Parametereinstellung des erfindungsgemäßen Verfahrens befindlichen Zielführungsanweisungen verwendet.

## Patentansprüche

1. Verfahren zur Auswahl von Karteninformationen aus einer digitalen Karte, ausgehend von einem vorgegebenen Polygonzug auf der digitalen Karte, wobei die ausgewählten Karteninformationen zusätzlich zu den durch den Polygonzug definierten Informationen in Abhängigkeit wenigstens eines Parameters einen Routenkorridor umfassen, **dadurch gekennzeichnet dass** der wenigstens eine Parameter vorsieht, dass die ausgewählten Karteninformationen abhängig von der Strassenklasse ein-, zwei-, oder vielfehlertolerant sind.

2. Verfahren nach Anspruch 1, **dadurch gekennzeichnet, dass** der wenigstens eine Parameter vorsieht, dass die Karteninformationen im Start-und Zielbereich (105,205) des Polygonzugs vielfehlertolerant sind.

3. Verfahren nach einem der vorhergehenden Ansprüche, **dadurch gekennzeichnet, dass** der wenigstens eine Parameter vorsieht, dass die ausgewählten Karteninformationen Zielführungsanweisungen umfassen.

4. Verfahren nach Anspruch 3, **dadurch gekennzeichnet, dass** die Zielführungsanweisungen auf dem kürzesten, schnellsten oder effizientesten Weg zum Polygonzug zurückführen (Nebenroute) und/oder zum Ziel zurückführen (Alternativroute).

5. Verwendung einer Navigationsvorrichtung mit einem Speicher und mit einem Navigationsrechner, wobei in dem Speicher die gemäss einem der vorhergehenden Ansprüche ausgewählten Karteninformationen gespeichert sind, **dadurch gekennzeichnet, dass** mittels des Navigationsrechners aus den Karteninformationen Zielführungsanweisungen generierbar sind.

6. Verwendung einer Navigationsvorrichtung mit einem Speicher, wobei in dem Speicher die gemäss Anspruch 3 oder 4 ausgewählten Karteninformationen gespeichert sind, **dadurch gekennzeichnet, dass** die Zielführungsanweisungen zur Navigation verwendbar sind.

## Claims

1. Method for selecting map information from a digital map, on the basis of a prescribed traverse on the digital map, where the selected map information comprises a route corridor on the basis of at least one parameter in addition to the information defined by the traverse, **characterized in that** the at least one parameter provides for the selected map information to be tolerant of one, two or multiple errors depending on the road class.

2. Method according to Claim 1, **characterized in that** the at least one parameter provides for the map information to be tolerant of multiple errors in the start and destination areas (105, 205) of the traverse.

3. Method according to one of the preceding claims, **characterized in that** the at least one parameter provides for the selected map information to comprise routing instructions.

4. Method according to Claim 3, **characterized in that** the routing instructions on the shortest, fastest or most efficient path lead back to the traverse (secondary route) and/or lead back to the destination (alternative route).

5. Use of a navigation apparatus with a memory and with a navigation computer, where the memory stores the map information selected on the basis of one of the preceding claims, **characterized in that** the navigation computer can be used to generate routing instructions from the map information.

6. Use of a navigation apparatus with a memory, where the memory stores the map information selected on the basis of Claim 3 or 4, **characterized in that** the routing instructions can be used for navigation.

## Revendications

1. Procédé de sélection d'informations cartographiques à partir d'une carte numérique en partant d'un tracé polygonal prédéfini sur la carte numérique,
selon lequel les informations cartographiques sélectionnées comprennent au moins un paramètre d'un corridor routier, en plus des informations définies en fonction du tracé polygonal,
**caractérisé en ce qu'**
au moins un paramètre prévoit que les informations cartographiques sélectionnées acceptent une erreur, deux erreurs ou des erreurs multiples en fonction de la classe routière.

2. Procédé selon la revendication 1,
**caractérisé par**
au moins un paramètre prévoyant que les informations cartographiques dans la zone de départ et de destination (105, 205) du tracé polygonal acceptent des erreurs multiples.

3. Procédé selon l'une des revendications précédentes,
**caractérisé par**
au moins un paramètre qui prévoit que les informations cartographiques sélectionnées comprennent des indications de guidage vers la destination.

4. Procédé selon la revendication 3,
**caractérisé en ce que**
les indications de guidage vers la destination se font sur le trajet le plus court, le plus rapide ou le plus efficace par rapport au tracé polygonal (trajet auxiliaire) et/ou reviennent vers la destination (trajet alternatif).

5. Utilisation d'un dispositif de navigation comportant une mémoire et un calculateur de navigation, la mémoire contenant l'enregistrement d'informations cartographiques sélectionnées selon l'une des revendications précédentes,
**caractérisée en ce que**
le calculateur de navigation permet de générer des indications de guidage vers la destination à partir des informations cartographiques.

6. Utilisation d'un dispositif de navigation équipé d'une mémoire, selon lequel la mémoire contient l'enregistrement des informations cartographiques sélectionnées selon la revendication 3 ou 4,
**caractérisée en ce que**
les indications de guidage vers la destination sont utilisables pour la navigation.
